Europäisches Patentamt

European Patent Office

Office européen des brevets

(11) Publication number: **0 021 649**

A2

(12) # EUROPEAN PATENT APPLICATION

(21) Application number: 80301862.1

(22) Date of filing: 04.06.80

(51) Int. Cl.³: **B 60 B 11/02**
**B 60 B 15/26**

(30) Priority: 08.06.79 GB 7920028
24.11.79 GB 7940702

(43) Date of publication of application:
07.01.81 Bulletin 81/1

(84) Designated Contracting States:
AT BE CH DE FR IT LI NL SE

(71) Applicant: HESTAIR FARM EQUIPMENT LIMITED
Godinton Way
Ashford Kent TN23 1PB(GB)

(72) Inventor: Jones, David Montgomery
3 Wades Close Woodnewton
Peterborough(GB)

(74) Representative: Wisher, Michael Frederick et al,
URQUHART-DYKES & LORD 2 Pinfold Lane South
Luffenham
Oakham Leicestershire LE15 8NR(GB)

(54) **Wheel mounting apparatus.**

(57) Wheel mounting apparatus (24) suitable for use with agricultural tractors of medium power and above, to attach a supplementary wheel (22) and a primary wheel (18) to opposite sides of a spacer (26). The apparatus comprises three tensioning links (44) mounted on the supplementary wheel which are simultaneously operated by a single central hand lever (72). The tensioning links engage three hooks (48) welded to the primary wheel and which also enter slots (80) in the spacer to prevent relative turning movement between the spacer and the primary wheel.

FIG. 3

EP 0 021 649 A2

Croydon Printing Company Ltd.

-1-

TITLE: WHEEL MOUNTING APPARATUS

This invention relates to wheel mounting apparatus suitable to attach ground-engageable primary and supplementary vehicle wheels to opposite sides of a spacer. An example of the use of such apparatus is to attach so-called dual wheels to the driven wheels of an agricultural tractor.

Many proposals have been made, such as in US Patents 3,082,040 and 3,337,270, for such wheel mounting apparatus but all of such proposals known to the applicants leave something to be desired so far as concerns the ability of the apparatus to cope with the high power output of modern tractors and the like, and/or as far as concerns the ease with which a supplementary wheel can be attached to and detached from a primary wheel (eg one of the driven wheels of a tractor) by means of the apparatus.

As regards the power limitations of such apparatus, it is found in the case of one form of such apparatus that the small incremental creeping movements of one wheel relative to the other during use eventually result in damage to the apparatus making it very difficult to detach the wheel after use, and indeed to re-attach it again later.

Then, so far as concerns the ease of attachment, previous proposals all involve the use of a series of tensioners each of which has to be individually manipulated during the wheel mounting and dismounting operation. Such manipulation involves the use of a spanner to operate a nut in many cases - which is a time concuming operation, particularly in the case of apparatus for high power applications which usually has a relatively large number of tensioners.

The invention as claimed provides improvements in wheel mounting apparatus by the provision of a tensioning mechanism operable to tension simultaneously two or more link means which hold the wheels on opposite sides of a spacer, the invention also provides link means which constitute abutments for positive non-frictional transmission of tractive torque through the spacer between the two wheels.

The advantages offered by the invention are mainly improvements so far as concerns the ease and speed of attachment and detachment of a secondary wheel to and from a primary wheel and/or the capability of the assembly to transmit the power applied in the use to the wheels of tractors of medium power and above, ie about 60 kilowatts and above.

An embodiment of the invention will now be described by way of example with reference to the accompanying drawings in which:-

Figure 1 shows a perspective view of a tractor having primary and supplementary rear traction wheels secured together by wheel mounting apparatus according to the invention;

Figure 2 shows a perspective view of one of the pairs of traction wheels of Figure 1 in a disassembled state, with a spacer band assembled on the supplementary wheel, and the primary wheel alongside it ready for the supplementary wheel to be offered up to the primary wheel for attachment thereto;

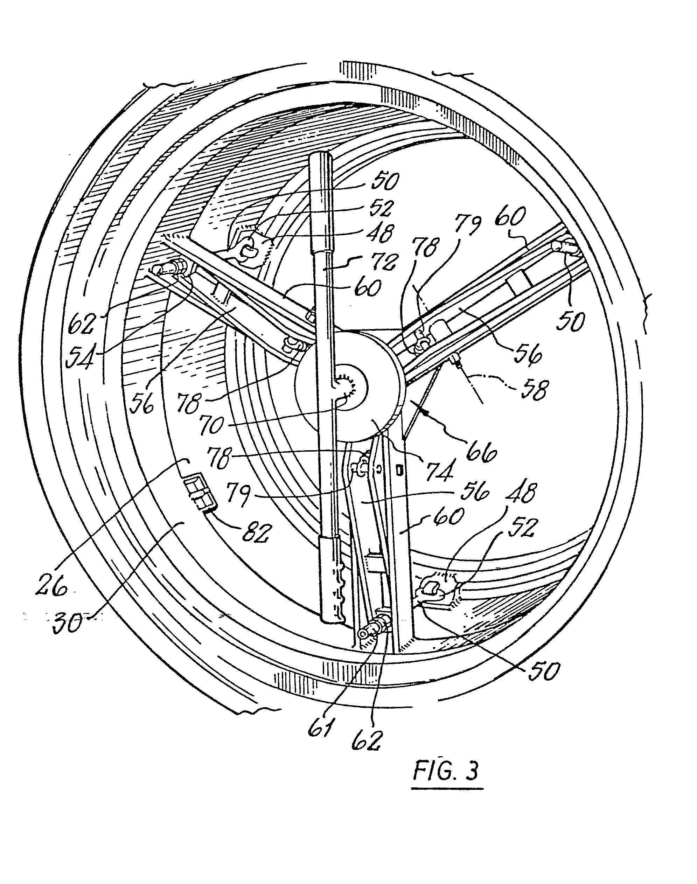

Figure 3 shows a close-up perspective view of the wheel mounting apparatus as seen in Figure 1, with the primary and supplementary wheels secured together;

Figure 4 shows a radial section through the wheel mounting apparatus of Figures 1 to 3 in use securing two wheels together; and

Figure 5 shows an exploded view of the wheel mounting apparatus of Figures 1 to 4, with the primary wheel omitted.

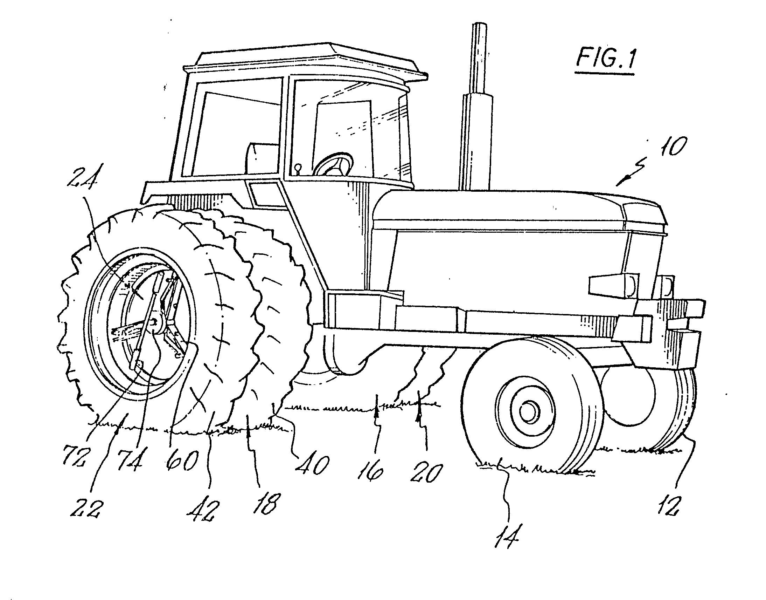

As shown in Figure 1 of the drawings, a tractor 10 has steerable front wheels 12, 14 and power driven primary rear traction wheels 16, 18 (supplied as original equipment with the tractor) together with supplementary wheels 20, 22 mounted on the primary wheels by respective sets of wheel mounting apparatus 24 to be described below.

Supplementary wheels 20, 22 increase the traction of the driven rear wheel assemblies of tractor 10 by doubling the area of tyre in contact with the ground. For the same reason, the use of the supplementary wheels also reduces compaction of the ground by the tractor during use.

The two sets of wheel mounting apparatus 24 for supplementary wheels 20 and 22 are identical in structure and will now be described in detail with reference to wheels 18 and 22.

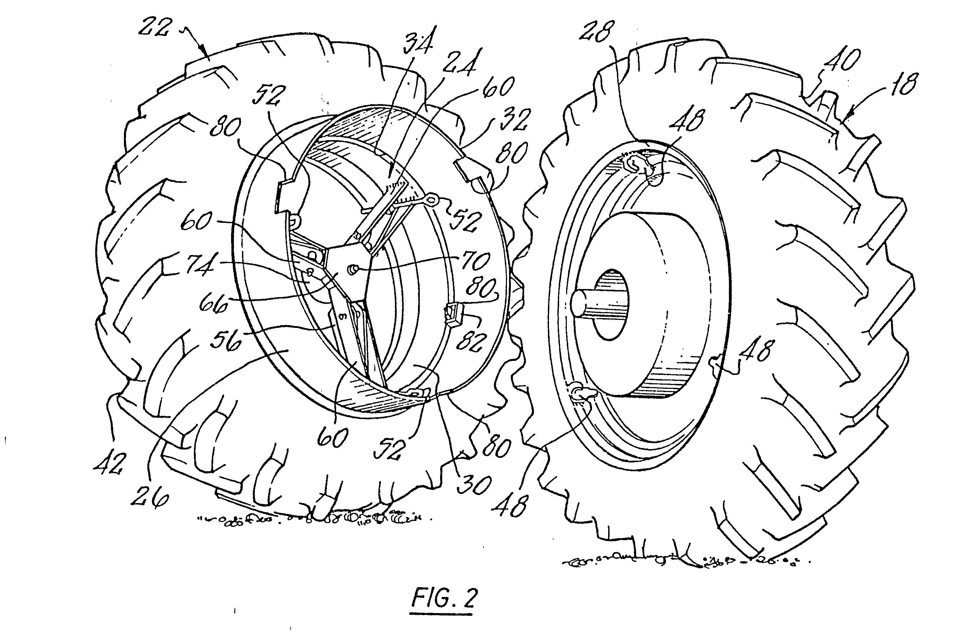

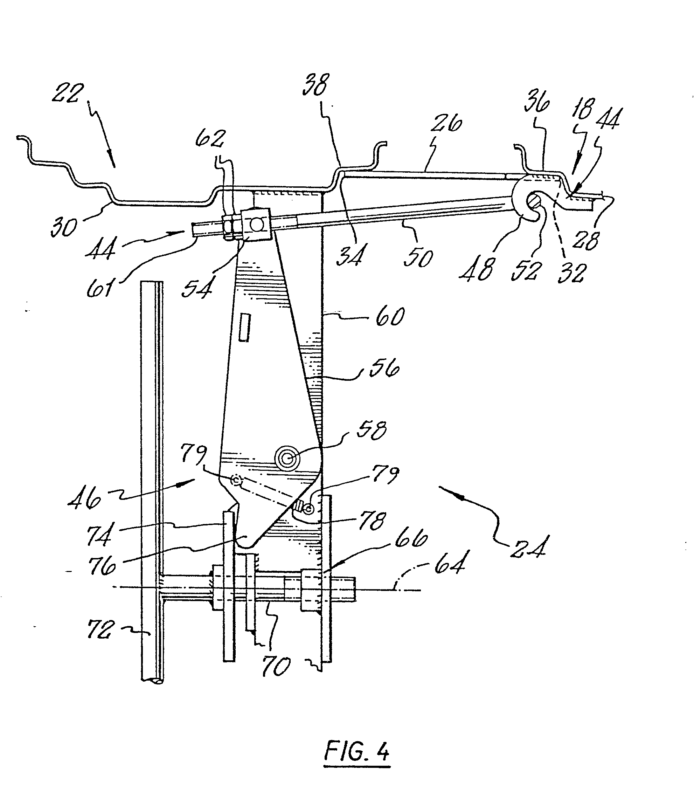

The wheel mounting apparatus 24 is effective to secure wheels 18 and 22 to opposite sides of a spacer in the form of a steel band 26. As shown best in Figures 2 and 4 spacer 26 is located in and lodged between the rims 28,30 of wheels 18,22 respectively, the peripheral edges 32, 34 of the spacer band being located immediately under the inner edge of the bead seats 36,38 for pneumatic tyres 40, 42.

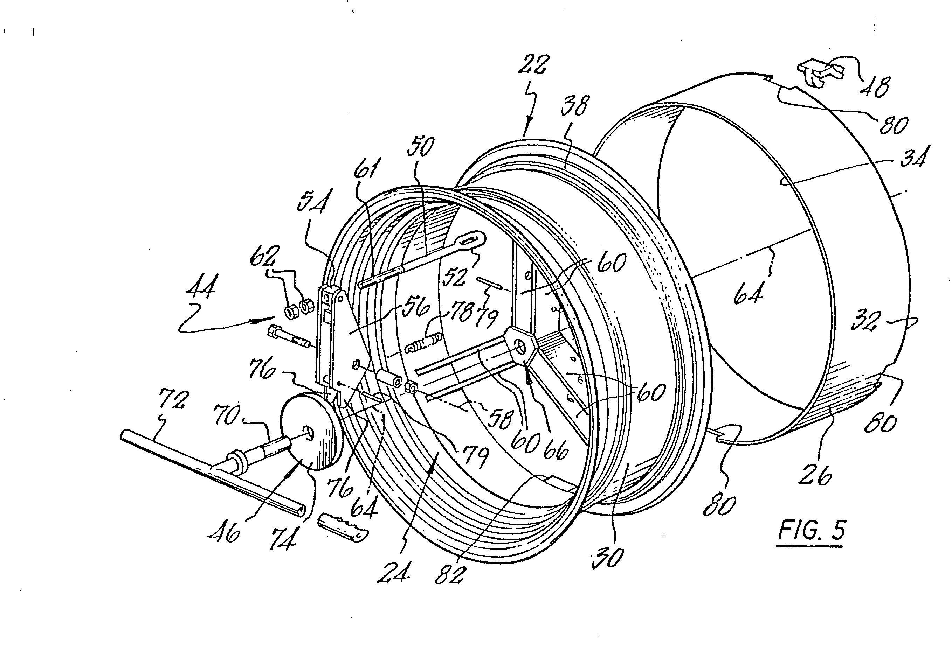

Broadly, wheel mounting apparatus 24 comprises at least two (in this embodiment three) link means 44 securable between wheels 18 and 22 at 120 degree intervals, together with a tensioning mechanism 46 operable to act on the three link means 44 simultaneously, to set up tension therein and thereby attach the two wheels to the spacer 26. Figure 5 shows, for clarity, only one of the link means 44 and its associated part of tensioning mechanism 46.

Each of the three link means 44 comprises two inter-engageable hook elements of which one, 48, is fixed by welding to the radially inner side of primary wheel rim 28 and is of hook-like form and the other 50 is of rod-like form having an eye 52 (constituting hook means) at one end and is movable so as to be engageable with its respective fixed hook element 48. The three movable hook elements 50 are each pivotally connected at their inner ends by respective trunnions 54 to tensioning mechanism 46.

Tensioning mechanism 46 comprises three lever arms 56 mounted for pivotal movement about respective axes 58 between respective pairs of mounting arms 60. The lever arms 56 each have their own trunnion 54 pivotally mounted at the radially outer end of the arm through which the screw threaded inner end 61 of its movable hook element 50 extends. A pair of adjustable nuts 62 are received on the end of each hook element 50.

Mounting arms 60 are welded at their outer ends to the inner surface of rim 30 of supplementary wheel 22 in generally radially-extending attitudes at 120 degree intervals about the axis 64 of wheel 22.

At their radially inner ends, mounting arms 60 are welded together to provide a central hub 66 which is internally screw threaded to receive the screw threaded shank 70 of a hand lever 72 which controls tensioning mechanism 46. Hand lever 72 has a flange 74 which co-operates with the three inner ends 76 of lever arms 56 so that the hand lever is operable to pivot the three lever arms simultaneously about their axes 58 and thereby set up tension in link means 44.

Resilient means in the form of a spring 78 is provided to act between mounting pins 79 on each mounting arm 60 and on its lever arm 56 so as to resiliently bias the lever arm with a force having a moment (anti-clockwise in Figure 4) such as to set up tension in rod 50 of link means 44.

As shown in Figures 2 and 5, spacer band 26 has formed in its peripheral edges 32 and 34, four slots or notches 80 - three in edge 32 and one in edge 34. These slots are proportioned to receive hook elements 48 and a valve guard member 82 welded to supplementary wheel rim 30. Thus hook elements 48 and valve guard member 82 constitute drive transmitting abutments for engagement with complementary drive transmitting abutments constituted by slots 80. It will be seen that these abutments prevent angular movement of wheels 18 and 22 relative to spacer 26 and hence relative to each other, during use and that the hook elements 48 thus serve the dual function of forming part of link means 44 and of positively transmitting drive.

For assembly purposes, supplementary wheel 22 with wheel mounting apparatus 24 and spacer 26 is offered up to primary wheel 18 and hook elements 48 and guard 82 are fitted in slots 80. Springs 78 allow rods 50 to be manually pulled outwards (after unscrewing hand lever 72) for engagement of eyes 52 with hooks 48 - which greatly facilitates rapid assembly. The springs hold the eyes 52 on hooks 48, and hand lever 72 is then turned to tension all three link means 44, whereby supplementary wheel 22 is firmly secured to primary wheel 18. Disassembly is the reverse of the above procedure. The tractor primary wheels 16 and 18 are preferably raised slightly by running them onto wooden planks to assist assembly. Likewise, spacer 26 may be spot welded to wheel rim 30 for the same purpose.

The principal advantages provided by the above embodiment are the simple and rapid attachment and detachment procedure, and the high power transmission capability provided by the hooks 48, and guard 82 in combination with spacer 26 and its slots 80, without the use of special welding pieces at the ends of mounting arms 60 - since the latter do not transmit driving torque.

Among modifications relating to the above embodiment are the following:-

1. Many modifications could be made to the tensioning mechanism 46 for link means 44, using cams and levers and screw threads in various ways;

2. More than one slot 80 could of course be provided in spacer 26 for engagement with any suitable additional abutment on the supplementary wheel rim 30. Modification to the abutments on the spacer 26 also includes the provision of welded-on or otherwise secured abutments;

3. Spacer 26 could be modified in various ways including the provision of weight reducing holes in it or even forming it as a frame-like fabrication and the term "spacer" is intended to cover all such mechanical equivalents of spacer 26 .

The wheel mounting apparatus could be sold as a kit without even a spacer, for farmers to weld into their existing supplementary wheels. Alternatively the apparatus could be sold welded into a wheel rim without a tyre and without a wheel nave, and the term "wheel" is to be construed accordingly. The invention could also be applied to cage wheels. Vehicles on which wheel mounting apparatus according to the invention could be used include:

a) tractors, combines and all self-propelled agricultural machines;

b) industrial and construction machinery;

c) non-driven wheels of such implements as seed drills;

d) any self-propelled vehicle (to increase traction and reduce soil compaction), and any non-self-propelled agricultural vehicle (to reduce soil compaction).

## CLAIMS

1. Wheel mounting apparatus (24) suitable to attach ground-engageable primary (18) and supplementary (22) vehicle wheels to opposite sides of a spacer (26), the apparatus comprising at least two link means (44) securable between the wheels, characterized by a tensioning mechanism (46) operable to act on both of the link means (44) simultaneously to set up tension therein and thereby attach the two wheels (18,22) to the spacer (26).

2. Apparatus (24) according to claim 1 characterized in that at least one of said link means (44) provides a drive transmitting abutment (48) to prevent angular movement of one (18) of said wheels relative to said spacer (26).

3. Apparatus (24) according to claim 2 characterized in that each of said link means (44) comprises inter-engageable hook elements (48, 50), one (48) of said hook elements being fixable to one (18) of the wheels and constituting a drive transmitting abutment for engagement with a complementary drive transmitting abutment (80) provided on said spacer (26).

4. Apparatus (24) according to claim 3 in combination with a spacer (26) characterized by said complementary drive transmitting abutment on said spacer being in the form of a slot (80) or notch formed in the peripheral edge (32) of the spacer (26).

5. Apparatus (24) according to claim 3 or claim 4 characterized in that the other (50) of said hook elements of each said link means (44) is of rod-like form having hook means (52) at one end.

6. Apparatus (24) according to any one of claims 1 to 5 characterized in that said tensioning mechanism (46) comprises pivotally mounted lever arms (56), one lever arm connected to each of said link means (44).

7. Apparatus (24) according to claim 6 characterized by a hand lever (72) co-operating with said lever arms (56) and operable to pivot all the lever arms simultaneously and thereby set up tension in the link means (44).

8. Apparatus (24) according to claim 7 characterized in that said lever arms (56) are pivotally mounted on respective mounting arms (60) which are fixable in generally radially extending positions to one(22) of said wheels.

9. Apparatus (24) according to claim 8 characterized in that said mounting arms (60) are joined together at their inner ends and form a mounting (66) for said hand lever (72).

10. Apparatus (24) according to claim 9 characterized by resilient means (78) connected to said lever arms(56) to resiliently bias the lever arms (56) with a force having a moment such as to set up tension in said link means (44).

FIG.1

FIG.2

FIG. 3

FIG. 4

FIG. 5